# EUROPÄISCHE PATENTSCHRIFT

(11) **EP 2 818 751 B1**
(45) Veröffentlichungstag und Bekanntmachung des Hinweises auf die Patenterteilung: **08.04.2020**
(21) Anmeldenummer: 14002056.1
(22) Anmeldetag: 14.06.2014
(51) Int. Cl.: F16F 9/06, F16F 9/18, F16F 9/32, B60G 17/015, B60G 17/048, B60G 17/056, B60G 17/08

(54) **Hydropneumatische Kolben-Zylinder-Anordnung**
Hydropneumatic piston-cylinder arrangement
Système de cylindre-piston hydropneumatique

(30) Priorität: 28.06.2013 DE 102013010834
(43) Veröffentlichungstag der Anmeldung: 31.12.2014
(73) Patentinhaber: HYDAC Systems & Services GmbH, 66280 Sulzbach (DE)
(72) Erfinder: Mohrbacher, Markus, 66606 St. Wendel (DE)
(74) Vertreter: Bartels und Partner, Patentanwälte

(56) Entgegenhaltungen:
- DE-A1- 3 613 677
- DE-A1- 10 041 028
- DE-A1-102008 054 006
- DE-B- 1 190 812
- DE-C2- 1 049 720
- GB-A- 670 786
- JP-A- S5 517 709
- US-A- 5 123 671
- US-A1- 2006 163 017

## Beschreibung

Die Erfindung betrifft eine hydropneumatische Kolben-Zylinder-Anordnung mit den Merkmalen im Oberbegriff von Anspruch 1.

Derartige hydropneumatische Kolben-Zylinder-Anordnungen sind im Stand der Technik bekannt. Sie werden als Feder-Dämpfer-Elemente beispielsweise eingesetzt, um die Bewegungen eines Fahrzeuggestells von einer darauf montierten Fahrerkabine zu entkoppeln. Auf diese Weise wird die Belastung des Fahrers verringert und dessen Fahrkomfort beträchtlich erhöht. Eine gattungsgemäße hydropneumatische Kolben-Zylinder-Anordnung wird beispielsweise in der DE 10 2009 035 570 A1 beschrieben. Diese wird zur Dämpfung von Achssystemen eingesetzt und weist ein Zylindergehäuse mit mindestens einem darin längsverfahrbar angeordneten Trennkolben, der einen ersten Medienraum, insbesondere zur Aufnahme eines Arbeitsfluides, von einem zweiten Medienraum zur Aufnahme eines Arbeitsgases mediendicht trennt, und mit einem hydropneumatischen Speicher auf, der auf den ersten Medienraum im Zylindergehäuse einwirkt.

Beim Einsatz einer solchen hydropneumatischen Kolben-Zylinder-Anordnung hat sich gezeigt, dass insbesondere bei schnellen Lastwechseln und bei der Einnahme der jeweiligen Endlage des Kolbens im Zylinderraum das hierbei in den einzelnen Medienräumen der Anordnung jeweils im Betrieb ein- und auszubringende Arbeitsfluid zur Kavitation führt. Kavitation bedeutet fachsprachlich das Auftreten von Hohlraumbildungen in Flüssigkeiten durch spontane Verdampfung, wenn der momentane örtliche Druck den Dampfdruck der Flüssigkeit unterschreitet. Sinkt bei Beschleunigung einer strömenden Flüssigkeit, hier in Form des Hydraulikmediums, der Druck unter den Dampfdruck der Flüssigkeit ab, so bilden sich in der Flüssigkeit Gas- oder Dampfbläschen; bei nachfolgender Verzögerung steigt der Druck wieder an, was zur Kondensation der Gas- oder Dampfblasen führt.

Dieser Vorgang ist infolge der damit einhergehenden plötzlichen Volumenänderungen mit sehr starken Druckstößen verbunden, die neben einer starken Schallabstrahlung auch zur allmählichen Zerstörung benachbarter fester Körper führen können, wobei man die dahingehende Werkstoffzerstörung fachsprachlich mit Kavitationskorrosion bezeichnet. Letztere tritt insbesondere an denjenigen Teilen auf, die dann mit den hohen Geschwindigkeiten des Arbeitsfluids umströmt werden, also beispielsweise im Bereich sich im Querschnitt verengender Blenden- oder Drosselquerschnitte sowie an zugeordneten an- oder umströmten Gehäuseteilen der Anordnung (Brockhaus Enzyklopädie, 21. Auflage, Band 14). Durch den bereits angesprochenen Dampf- oder Gasbläschenaustrag aufgrund des reduzierten Drucks bei dem beschleunigten Arbeitsfluid ändert sich die Steifigkeit der im Idealfall als hydraulische inkompressible Drucksäule anzusehenden eingesetzten Fluidmenge, was die Feder-Dämpfungscharakteristik nachteilig beeinflusst.

Die US 2006/0163017 A1, die den Oberbegriff des Anspruchs 1 offenbart, beschreibt eine gattungsgemäße hydropneumatische Kolben-Zylinder-Anordnung, insbesondere zur Verwendung in Fahrzeug-Federungssystemen und zur Dämpfung von Bewegungen einer Fahrerkabine eines dahingehenden Fahrzeuges, mit einem Zylindergehäuse mit mindestens einem darin längsverfahrbar angeordneten Trennkolben, der einen ersten Medienraum, insbesondere zur Aufnahme eines Arbeitsfluides, wie einem Hydrauliköl, von einem zweiten Medienraum, insbesondere zur Aufnahme eines Arbeitsgases, wie Stickstoff (N₂), bevorzugt mediendicht, trennt, und mit einem hydropneumatischen Speicher, der auf den ersten Medienraum im Zylindergehäuse einwirkt, wobei als hydropneumatischer Speicher ein Kolbenspeicher mit einem Speichergehäuse und mit mindestens einem darin längsverfahrbar angeordneten Speicherkolben vorgesehen ist, wobei dieser Speicherkolben einen ersten Speicherraum, insbesondere zur Aufnahme des Arbeitsfluides, von einem zweiten Speicherraum, insbesondere zur Aufnahme eines Speichergases, wie Stickstoff (N₂), bevorzugt mediendicht, trennt, wobei der erste Speicherraum mit dem ersten Medienraum medienführend verbunden ist, und wobei ein Medienausgleichsraum, insbesondere zur Aufnahme des Arbeitsfluides, zwischen der Außenseite der Stange und der Innenseite des Zylindergehäuses angeordnet ist.

Weitere Kolben-Zylinder-Anordnungen gehen aus der DE 1 190 812, der DE 1 049 720, der DE 100 41 028 A1, der DE 10 2008 054 006 A1, der DE 36 13 677 A1, der GB 670 786, der US 5 123 671 und der JP S55-017709 hervor.

Ausgehend von diesem Stand der Technik liegt der Erfindung die Aufgabe zugrunde, die bekannten hydropneumatischen Kolben-Zylinder-Anordnungen derart weiter zu verbessern, dass Kavitationserscheinungen vermieden sind und die vorgegebene Feder-Dämpfungscharakteristik in jedem Betriebszustand der Anordnung beibehalten wird.

Eine Lösung dieser Aufgabe besteht in einer hydropneumatischen Kolben-Zylinder-Anordnung mit den Merkmalen von Anspruch 1. Vorteilhafte Ausführungsformen und Weiterbildungen der Erfindung gehen aus den Unteransprüchen 2 bis 10 hervor.

Erfindungsgemäß ist gemäß dem kennzeichnenden Teil des Patentanspruchs 1 zur Lösung dieser Aufgabe vorgesehen, dass dieser Medienausgleichsraum permanent über eine Dämpfungseinrichtung in einer Kolbenanordnung an einer freien Stirnseite einer Kolbenstange mit dem ersten Medienraum medienführend verbunden ist und dass dieser Medienausgleichsraum zur Verhinderung von Kavitation zusätzlich permanent mit dem ersten Speicherraum direkt medienführend verbunden ist.

Durch den Medienausgleichsraum wird das Dämpfungsvermögen der Kolben-Zylinder-Anordnung verbessert. Besonders vorteilhaft vergrößert sich das Volumen des Medienausgleichsraums bei einem Einfedervorgang und verkleinert sich bei einem Ausfedervorgang, wobei sich das Volumen des ersten Medienraums dabei entsprechend umgekehrt verändert. Auf diese Weise wird eine Art freie Pendelbewegung des Arbeitsfluid-Volumens erzeugt, welche eine vorteilhafte Dämpfungswirkung mit sich bringt. Das Arbeitsfluid kann nun zwischen dem ersten Medienraum und dem Medienausgleichsraum über die Dämpfungseinrichtung bei den jeweiligen Ein- und Ausfedervorgängen hin und her bewegt werden, wobei die entstehende Bewegungsenergie in eine effektive Dämpfung umgesetzt wird.

Es ist ferner vorgesehen, dass als hydropneumatischer Speicher ein Kolbenspeicher mit einem Speichergehäuse und mit mindestens einem darin längsverfahrbar angeordneten Speicherkolben vorgesehen ist, dass dieser Speicherkolben einen ersten Speicherraum, insbesondere zur Aufnahme des Arbeitsfluids, von einem zweiten Speicherraum, insbesondere zur Aufnahme eines Speichergases, wie Stickstoff, bevorzugt mediendicht, trennt und dass der erste Speicherraum mit dem ersten Medienraum medienführend verbunden ist.

Aufgrund des Einsatzes des hydropneumatischen Speichers ist es im Betrieb der hydropneumatischen Kolben-Zylinder-Anordnung möglich, die in den einzelnen Medien- und Arbeitsräumen bevorrateten Fluidmengen des Arbeitsfluids mit einer vorgebbaren Vorspannung im Betrieb der Anordnung hin und her zu bewegen, so dass auch bei schnellen Strömungen des Arbeitsfluids, insbesondere im Bereich von Gehäuseumlenkstellen sowie in Bereichen von Blenden- und Drossel-anordnungen, der momentane örtliche Druck des Arbeitsfluids nicht derart abfallen kann, als dass es zu der ungewollten Dampf- oder Gasbläschenbildung im Arbeitsfluid kommen könnte. Insofern ist auch der Gefahr begegnet, dass durch plötzlich auftretende Druckstöße die Feder- und Dämpfungscharakteristik der Kolben-Zylinder-Anordnung in nachteiliger Weise beeinträchtigt wird. Der hydropneumatische Kolbenspeicher ist bevorzugt in dem Zylindergehäuse der hydropneumatischen Kolben-Zylinder-Anordnung im Wesentlichen integriert; es besteht aber auch die Möglichkeit, diesen extern von außen an das dahingehende Zylindergehäuse anzuschließen.

Es ist für einen Durchschnittsfachmann auf dem Gebiet der Feder- und Dämpfungssysteme für Fahrzeuge und Arbeitsmaschinen jedweder Art überraschend, dass er dabei auf der Seite des Kolbenspeichers nur mit einem sehr geringen Gaseintragsdruck arbeiten muss, regelmäßig im Bereich von 2 bar und weniger, und dass gegebenenfalls ein sogar nur mit dem Atmosphärendruck "vorgespannter" Kolbenspeicher der ungewollten Kavitationsbildung entgegenwirken kann. Da sich im Betrieb der Anordnung die im System befindliche Fluidmenge nicht ändert, sondern nur deren Drucksituation im jeweiligen Medien- oder Arbeitsraum, genügt die geringe Vorspannung des hydropneumatischen Speichers, insbesondere von seiner Gasseite her, um in der Art eines Ausgleichs- oder Pendelvolumens mit nur geringem Eintragsdruck die Fluidmengen wechselweise zwischen den einzelnen Medien- oder Arbeitsräumen hin und her zu schieben oder zu bewegen, um dergestalt die Funktion der Anordnung sicherstellen zu können. Dies hat so keine Entsprechung im Stand der Technik.

Aufgrund des damit einhergehenden geringen Energieeintrags vonseiten des Kolbenspeichers, kommt es auch im Funktionsbetrieb der Anordnung beim Verschieben des Pendelausgleichsvolumens von Fluid nur zu einem relativ geringen Wärmeeintrag, was sich wiederum günstig auf das Verhindern von Gas- oder Dampfblasen auswirkt, die insoweit im Arbeitsfluid gebunden bleiben. Da der Kolbenspeicher bevorzugt integraler Bestandteil der Gesamt-Kolben-Zylinder-Anordnung ist, baut die erfindungsgemäße Lösung schlank auf, was für Feder-Dämpfersysteme im Fahrzeugbau grundsätzlich gewünscht ist, und da wirksam das Entstehen von Kavitation vermieden ist, ist auch mit einem langlebigen Einsatz der Anordnung im Betrieb zu rechnen. Darüber hinaus lässt sich die erfindungsgemäße Anordnung kostengünstig realisieren und zeichnet sich durch einen wartungsarmen Betrieb aus.

Vorteilhaft ist das Speichergehäuse in der Art einer hohlen Stange ausgebildet, die in dem Zylindergehäuse längsverfahrbar geführt ist und die zumindest teilweise eine Hohlkammer umfasst, in welcher der Speicherkolben längsverfahrbar geführt ist. Somit ist der Kolbenspeicher in die hydropneumatische Kolben-Zylinder-Anordnung integriert, so dass Bauraum gespart wird und die Anordnung besonders schmal baut. Ein weiterer Vorteil ist, dass die Fluidverbindungen besonders kurz gehalten sind und keine zusätzlichen Elemente mit der Ausnahme von Bohrungen erfordern. Mithin wird eine Ausführungsform aufgezeigt, die besonders geringe Verluste durch Leckagen aufweist und die kostengünstig in der Herstellung ist.

Die Dämpfungseinrichtung kann eine Drosselstelle sein.

Ein Weg-Messsystem zur Bestimmung der Position der Kolbenanordnung kann vorteilhaft vorgesehen sein, das mit seiner streckenförmigen Positionsüberwachung auf der Außenseite des Zylindergehäuses angeordnet ist und dessen Positionsgeber, insbesondere in Form eines Magneten, in die Kolbenanordnung integriert ist. Somit kann die Position der Kolbenanordnung jederzeit exakt bestimmt werden.

Mit Vorteil ist ein Anschlag für den Speicherkolben an der anderen freien Stirnseite der Stange, respektive in deren freiem Endbereich, vorgesehen, wobei dieser Anschlag eine Aufnahmemöglichkeit zur zumindest teilweisen Bevorratung eines Speichergases aufweist. Auf diese Weise hat der zweite Speicherraum ein definiertes Mindestvolumen, so dass das Gas im zweiten Medienraum nur einen begrenzten maximalen Druck erreichen kann, der bevorzugt im Niederdruckbereich liegt. Dies hat den Vorteil, dass die Dichtungen entsprechend optimiert ausgelegt werden können und sich dadurch der Aufbau des Kolbenspeichers vereinfacht.

Besonders vorteilhaft bewegt sich der Speicherkolben in einer Richtung vom Anschlag weg, wenn das Arbeitsfluid im ersten Medienraum oder im Medienausgleichsraum unter einem Druck steht, der niedriger als ein vorgebbarer Vorspanndruck des Speichergases ist. Dementsprechend wird das Arbeitsfluid stets unter einer vorgebbaren Vorspannung gehalten, durch welche eine Kavitation verhindert wird.

Der Trennkolben kann zur Bildung einer Null-Lage oder einer Ausgangssituation für den Federungs- und Dämpfungsvorgang aus einer Anschlagposition heraus entgegen dem den Kolbenspeicher aufnehmenden Ende des Zylindergehäuses in einer Richtung bewegbar sein. Durch diese Anschlagposition wird eine definierte Null-Lage oder Ausgangssituation geschaffen, auf deren Basis die Kolben-Zylinder-Anordnung eingestellt werden kann.

Der Trennkolben kann vorteilhaft mit einer Dämpfungseinrichtung, insbesondere in Form eines Elastomerpuffers, auf seiner dem Kolbenspeicher zugewandten Seite versehen sein. Auf diese Weise wird ein direkter Anprall der Kolbenanordnung an den Trennkolben verhindert. Durch das gedämpfte Auftreffen der Kolbenanordnung wird mithin ein unsteter Verlauf der Dämpfungscharakteristik der Kolben-Zylinder-Anordnung vermieden. Das Verhalten der Kolben-Zylinder-Anordnung wird daher nahe einer Endlage, in der die Dämpfungseinrichtung fast keine Wirkung mehr hat, weil das Volumen des ersten Medienraums auf ein Minimum reduziert ist, weicher gestaltet.

In einer vorteilhaften Ausführungsform ist ein weiterer Trennkolben im Zylindergehäuse zur Bildung einer Niveaueinstellung angeordnet, der zusammen mit dem einen Trennkolben den zweiten Medienraum mit dem Arbeitsgas begrenzt und der auf seiner dem zweiten Medienraum abgewandten Seite an einen dritten Medienraum im Zylindergehäuse angrenzt, der bevorzugt mit einem Niveaueinstellungsfluid versorgbar ist. Mithin kann die einer vorgebbaren Niveaulage der Fahrerkabine jeweils zugeordnete Wegstrecke, um welche die Kolbenstange im Ausgangszustand aus dem Zylindergehäuse ausgefahren ist, eingestellt werden. Eine solche Niveauregulierung ist insbesondere dann vorteilhaft, wenn die Fahrerkabine zur Unterschreitung von insbesondere straßenseitig vorgegebenen Höhenbegrenzungen herabgelassen oder in bestimmten Situationen zusätzlich angehoben werden soll, beispielsweise um beim Hopfen- oder Rebenabernten einen besseren Überblick zu ermöglichen.

Die Erfindung ist nachfolgend anhand von in den Figuren dargestellten Ausführungsbeispielen näher erläutert. Es zeigen:
- Fig. 1: eine erfindungsgemäße Kolben-Zylinder-Anordnung in der Art eines Längsschnitts, jedoch der besseren Darstellung wegen ohne die sonst übliche Schraffierung;
- Fig. 2 bis 4: ein Ausschnitt der Kolben-Zylinder-Anordnung der Fig. 1 in mehreren Stufen eines Einfedervorgangs;
- Fig. 5 bis 7: die Kolben-Zylinder-Anordnung der Fig. 1 in mehreren Stufen eines Ausfedervorganges;
- Fig. 8: eine Kraft-Weg-Kennlinie der erfindungsgemäßen Kolben-Zylinder-Anordnung;
- Fig. 9 bis 12: verschiedene schematische Varianten der Dämpfungseinrichtung in der Kolbenanordnung; und
- Fig. 13: eine anders geartete Kolben-Zylinder-Anordnung, wie vorstehend beschrieben, mit einem Weg-Messsystem.

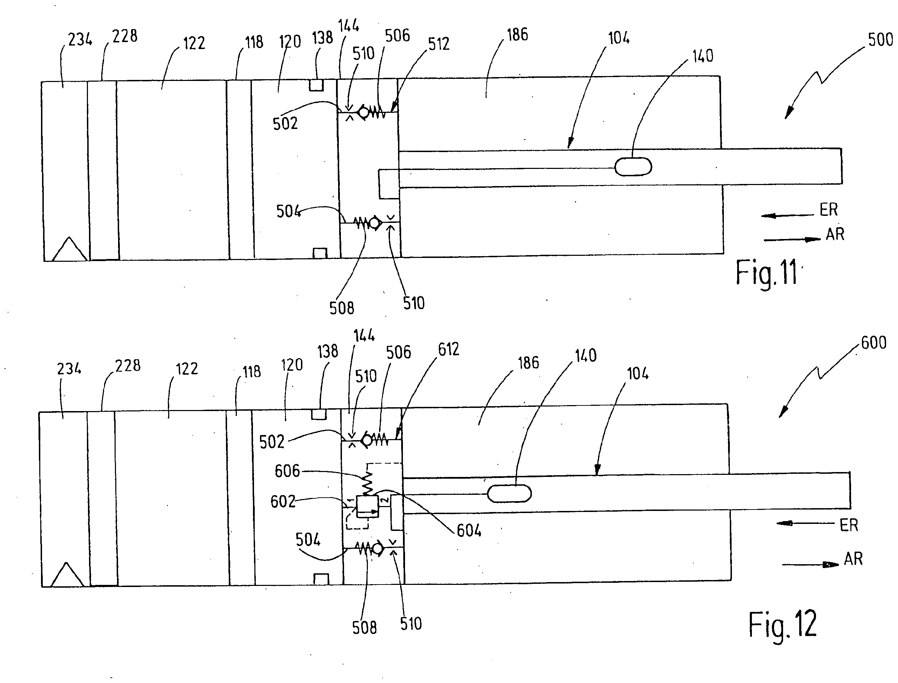

Die Ausführungsformen der Fig. 11 und 12 dienen lediglich der Erläuterung des Hintergrundes der Erfindung und sind nicht Gegenstand eines Anspruches.

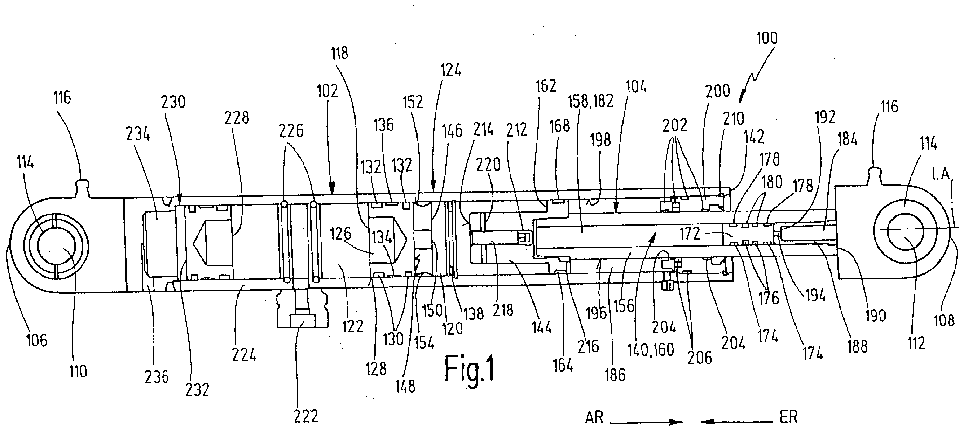

In der Fig. 1 ist eine hydropneumatische Kolben-Zylinder-Anordnung 100, insbesondere zur Verwendung in Fahrzeug-Federungssystemen und zur Dämpfung von Bewegungen einer Fahrerkabine eines dahingehenden Fahrzeuges gezeigt. Die Kolben-Zylinder-Anordnung 100 weist ein Zylindergehäuse 102 auf, in dem eine Kolbenstange 104 axial bewegbar angeordnet ist. Das Zylindergehäuse 102 und die Kolbenstange 104 weisen an ihren Enden 106, 108 angeschweißte Lageraugen 110, 112 mit darin vorgesehenen schalenartigen Lagerstellen 114 üblicher Bauart auf. Die Lagerstellen 114 können über Schmiernippel 116, gleichfalls in üblicher Weise, mit einem Schmiermittel versehen werden.

Im Zylindergehäuse 102 ist ein darin längsverfahrbar angeordneter Trennkolben 118 vorgesehen, der einen ersten Medienraum 120, insbesondere zur Aufnahme eines Arbeitsfluides, wie einem Hydrauliköl, von einem zweiten Medienraum 122, insbesondere zur Aufnahme eines Arbeitsgases, hier Stickstoff (N₂), mediendicht trennt. Auf diese Weise ist ein Teil eines Feder-Dämpfungssystems 124 gebildet. Der Trennkolben 118 weist eine Sackloch-Bohrung 126 auf, die in den zweiten Medienraum 122 einmündet. Auf der Außen-Umfangsseite 128 des Trennkolbens 118 sind zwei voneinander beabstandete Ringnuten 130 vorgesehen, in denen Führungsringe 132 angeordnet sind. Zwischen diesen Ringnuten 130 ist eine weitere ringförmige Aufnahmenut 134 für ein Dichtelement 136 vorgesehen. Der Trennkolben 118 ist aus einer Null-Lage oder einer Ausgangssituation für den Feder- und Dämpfungsvorgang von einer Anschlagposition 138 weg entgegen dem einen Kolbenspeicher 140 aufnehmenden Ende 142 des Zylindergehäuses 102 bewegbar. Die Anschlagposition 138 ist dabei aus einer Sprengringanordnung gebildet, die an der Innenwand des Zylindergehäuses festgelegt ist.

Um den möglichen Anprall einer Kolbenanordnung 144 der Kolbenstange 104 an den Trennkolben 118 in seiner Wirkung zu vermindern, ist der Trennkolben 118 mit einer Puffereinrichtung 146, bevorzugt in Form eines ringförmigen, kissenartigen Elastomerpuffers auf seiner dem Kolbenspeicher 140 zugewandten Seite 148 versehen. Der ringförmige Elastomerpuffer 146 weist eine axiale Bohrung 150 auf und ist auf der Umfangsseite 152 mit einer konkaven Ausnehmung 154 versehen. Durch diese derart gestaltete Puffereinrichtung 146 kann beim Anprall unter Kompression verdrängtes Elastomermaterial in der Bohrung 150 und in der Ausnehmung 154 aufgenommen werden, die insoweit auch die Rückstellung in die Ursprungslage der Ringform erleichtern.

Die Kolbenstange 104 weist die gestreckt verlaufende Kolbenanordnung 144 auf, an der ein Stangenteil 156 mit einer innenliegenden Hohlkammer 158 befestigt ist, die Teil einer hydropneumatischen Speicheranordnung 160 ist, die auf den ersten Medienraum 120 im Zylindergehäuse 102 im Betrieb der Vorrichtung einwirkt. Die Kolbenanordnung 144 weist eine ringflanschartige Verbreiterung 162 mit einer Umfangsnut 164 auf, in der ein Führungsring 168 angeordnet ist. Die ringflanschartige Verbreiterung 162 kann ebenfalls an der Anschlagposition 138 zur Anlage gebracht werden, so dass der Weg der Kolbenanordnung 144 in Einfederrichtung ER begrenzt ist.

Erfindungsgemäß ist als hydropneumatischer Speicher 160 in der Kolbenstange 104 ein Kolbenspeicher 140 mit dem Stangenteil 156 als Speichergehäuse und mit mindestens einem in deren Hohlkammer 158 längsverfahrbar angeordneten Speicherkolben 172 vorgesehen. Der Speicherkolben weist umfangsseitig vier voneinander beabstandete Nuten auf 174, 176, wobei in den äußeren Nuten 174 Führungsringe 178 und in den inneren Nuten 176 Dichtringe 180 angeordnet sind. Dieser Kolbenspeicher 140 trennt einen ersten Speicherraum 182, insbesondere zur Aufnahme des Arbeitsfluides, von einem zweiten Speicherraum 184, insbesondere zur Aufnahme eines Speichergases, wie Stickstoff (N₂), in üblicher, mediendichter Bauweise. Der erste Speicherraum 182 des Kolbenspeichers 140 ist mit dem ersten Medienraum 120 und einem Medienausgleichsraum 186 permanent medienführend verbunden, was im Folgenden noch näher erläutert werden wird.

Es ist ferner ein Anschlag 188 für den Speicherkolben 172 an der einen freien Stirnseite 190 des Stangenteils 156, respektive in deren freiem Endbereich, vorgesehen, um dessen freien Verfahrweg in Blickrichtung auf die Fig. 1 gesehen nach rechts zu begrenzen. Dieser Anschlag 188 weist die Speichermöglichkeit 184 für die Bevorratung eines Teils des Speichergases auf. Der Speicherkolben 172 bewegt sich von diesem Anschlag 188 nach links weg, sobald das Arbeitsfluid im ersten Medienraum 120 und/oder im Medienausgleichsraum 186 unter einem Druck steht, der niedriger als der vorgebbare Vorspanndruck des Speichergases im zweiten Speicherraum 184 ist, der teilweise von dem Anschlag 188 begrenzt ist. Der Vorspanndruck des Speichergases kann dabei bevorzugt im Niederdruckbereich liegen, beispielsweise einem Wert von ca. 2 bar entsprechen. Der Anschlag 188 ist topfförmig ausgebildet und weist in dem dem Speicherkolben 172 zugewandten Boden 192 eine axiale Bohrung 194 auf, die eine medienführende Verbindung zwischen dem zweiten Speicherraum 184 und der einen freien Stirnseite des Speicherkolbens 172 herstellt, dessen andere benachbart gegenüberliegende freie Stirnseite an den Speicherraum 182 angrenzt und dergestalt auf diesen einwirkt.

Das Stangenteil 156 ist von dem Stangenarbeitsraum 186, der den Medienausgleichsraum bildet, umgeben. Dieser Medienausgleichsraum 186 ist zur Aufnahme von Arbeitsfluid zwischen einer Außenseite 196 des Stangenteils 156 und einer Innenseite 198 des Zylindergehäuses 102 angeordnet und mit dem ersten Speicherraum 120 permanent medienführend verbunden. Je nachdem, inwieweit die Kolbenstange 104 im Zylindergehäuse 102 aufgenommen ist, ändert sich auch die wirksame Länge des Stangenteils 156 und mithin das Volumen des Medienausgleichsraums 186. Hiervon unabhängig ändert sich das wirksame Volumen vom ersten und zweiten Speicherraum 182, 184 nur über die Stellung des Speicherkolbens 172.

Der Medienausgleichsraum 186 wird auf seiner einen Seite durch ein Abschlusselement 200 des Zylindergehäuses 102 mediendicht abgeschlossen. Das Abschlusselement 200 führt zudem die Kolbenstange 104 mit dem Stangenteil 156. Hierzu sind im Abschlusselement 200 diverse Nuten 202 auf einer Außenumfangsseite und auf einer Innenumfangsseite vorgesehen, in denen Führungsringe 204 und Dichtringe 206 angeordnet sind. Das Abschlusselement 200 ist ferner durch einen Sprengring 210 im Zylindergehäuse 102 lagefest gehalten.

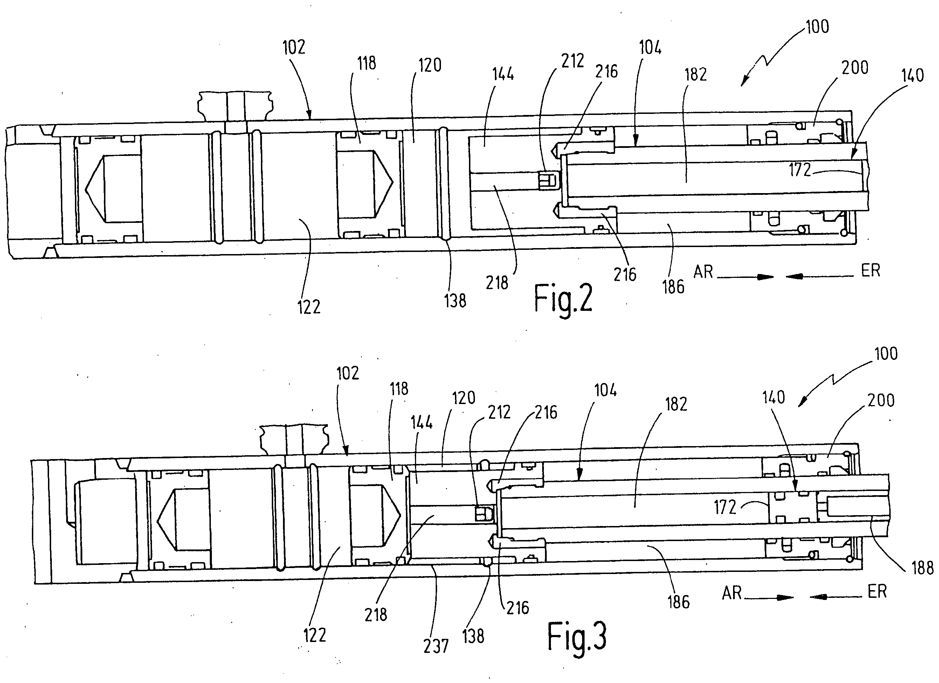

Der Medienausgleichsraum 186 ist permanent über eine Dämpfungseinrichtung 212 in Form einer Blende oder Drosselstelle in der Kolbenanordnung 144 mit der einen freien Stirnseite 214 der Kolbenstange 104 medienführend verbunden. Hierzu sind in der Kolbenanordnung 144 entsprechende Bohrungen 216, 218, 220 vorgesehen. Die von der Drosselstelle 212 zum Medienausgleichsraum 186 führenden Bohrungen 216 (s. auch Fig. 2 ff.) sind parallel zur Längsachse LA der Kolben-Zylinder-Anordnung 100 angeordnet, um das Arbeitsfluid an der Außenseite 196 des Stangenteils 156 vorbeizuführen. Ausgehend von der Drosselstelle 212 ist eine axiale Bohrung 218 im Kolben144 vorgesehen, der in Richtung des ersten Medienraumes 120 in diesen einmündet. Die Kolbenanordnung 144 ist weiter von einer Querbohrung 220 durchsetzt, um eine Fluidverbindung zwischen dem ersten Medienraum 120 und der Drosselstelle 212 auch für den Fall sicherzustellen, dass die Kolbenanordnung 144 stirnseitig am Elastomerpuffer 146 anliegt, was im Folgenden noch näher erläutert werden wird. Das Volumen des Medienausgleichsraums 186 vergrößert sich bei einem Einfedervorgang und verkleinert sich bei einem Ausfedervorgang, entsprechend umgekehrt verändert sich das Volumen des ersten Medienraumes 120 dabei. Entfällt bei einer Ausführungsform gemäß den Darstellungen nach den Fig. 2ff der Elastomerpuffer 146, was ohne weiteres vorgesehen sein kann, entfallen gemäß diesen Darstellungen auch die Querbohrung 220 im Kolben 144.

Der zweite Medienraum 122 weist einen Speichergasanschluss 222 in der Wand 224 des Zylindergehäuses 102 auf, über den der zweite Medienraum 122 mit Arbeitsgas versorgbar ist. Angrenzend an den Speichergasanschluss 222 sind zwei Anschlagringe 226 vorgesehen, die den Weg des Trennkolbens 118 und eines weiteren Trennkolbens 228 begrenzen, sofern diese sich im Betrieb der Vorrichtung aufeinander zu bewegen.

Der weitere Trennkolben 228 ist im Zylindergehäuse 102 zur Bildung einer Niveaueinstellung 230 angeordnet. Seine Form ist identisch zu der des ersten Trennkolbens 118, wobei der weitere Trennkolben 228 in Längsrichtung LA gesehen um 180° gedreht in das Zylindergehäuse 102 eingesetzt ist. Der weitere Trennkolben 228 begrenzt zusammen mit dem einen Trennkolben 118 den zweiten Medienraum 122 mit dem Arbeitsgas. Der weitere Trennkolben 228 grenzt an seiner dem zweiten Medienraum 122 abgewandten Seite 232 an einen dritten Medienraum 234 im Zylindergehäuse 102 an, der über einen Fluidanschluss 236 mit einem Niveaueinstellungsfluid einer üblichen Versorgungseinheit (nicht dargestellt) versorgbar ist. Durch das Einbringen von Niveaueinstellungsfluid vorgebbaren Drucks mittels der Versorgungseinheit (Fluidpumpe) in den dritten Medienraum 234 kann somit die Kolbenstange 104 auf ein bestimmtes Niveau aus dem Zylindergehäuse 102 herausverfahren werden. Durch Ablassen von Niveaueinstellungsfluid aus dem dritten Medienraum 234 kann entsprechend die Kolbenstange 102 in das Zylindergehäuse 102 (wieder) eingefahren und insoweit das Niveau, also beispielsweise für die Höhenlage der Fahrerkabine um eine vorgebbare Wegstrecke reduziert werden.

Der Einfedervorgang der erfindungsgemäßen Kolben-Zylinder-Anordnung 100 ist in den Fig. 2 bis 4 dargestellt. Der Einfedervorgang geht vorzugsweise von einer mittleren Position der Kolbenstange 104 aus. Sie kann also von dieser Position aus in etwa gleich weit in das Zylindergehäuse 102 zum Einfedern eingeschoben oder zum Ausfedern herausgezogen werden. Beim Einfedervorgang (vgl. Fig. 2) wird die Kolbenstange 104 in das Zylindergehäuse 102 eingeschoben. Dabei wird zunehmend ein Druck auf das Arbeitsfluid im ersten Medienraum 120 über den Kolben 144 ausgeübt, wobei der zunehmende Druck den Trennkolben 118 ebenfalls in die Einfederrichtung in Blickrichtung auf die Fig. 2 bis 4 gesehen nach links bewegt und das Arbeitsgas im zweiten Medienraum 122 dabei gleichzeitig komprimiert, was zu einer Druckerhöhung im Medienraum 122 führt. Zudem wird Arbeitsfluid aus dem ersten Medienraum 120 über die Dämpfungseinrichtung 212 in Form der Drosselstelle in den Medienausgleichsraum 186 über die Längsbohrungen 216 verdrängt. Hierdurch wird die Bewegung der Kolbenstange 104 beim Einfedern vorteilhaft gedämpft.

Nach einer vorgebbaren Einfederlänge, beispielsweise 40 mm, kommt die Kolbenanordnung 144 in Anlage mit dem Trennkolben 118. Dieser Zustand ist in Fig. 3 gezeigt. Das Arbeitsfluid (Hydrauliköl) ist dann bis auf einen kleinen Rest in einem Ringraum 237 um die Kolbenanordnung 144 herum in den Medienausgleichsraum 186 über die dämpfende Drosselstelle 212 verdrängt worden.

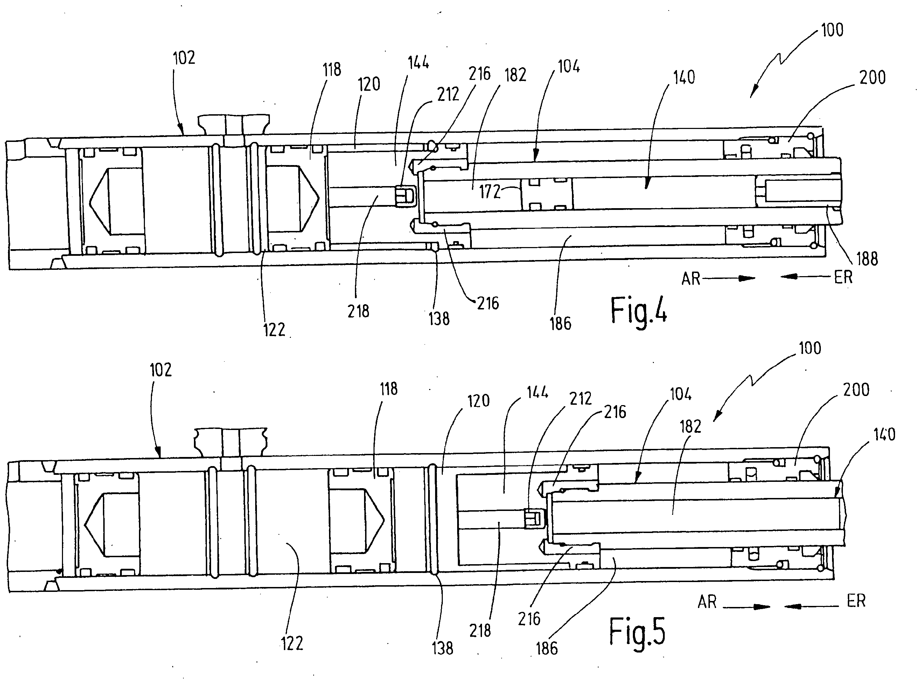

Wird die Kolbenanordnung 144 aufgrund weiterer Krafteinwirkung von außen weiter, beispielsweise um 10 mm, bis zur Anschlagposition 138 bewegt (vgl. Fig. 4), so reduziert sich der Druck im Medienausgleichsraum 186 aufgrund dessen Volumenvergrößerung erheblich, weil kein Arbeitsfluid aus dem ersten Medienraum 120 mehr nachfließen kann. Der Druck fällt von ca. 40 bar annähernd schlagartig auf ca. 1,5 bar oder weniger ab. Bei diesem starken Druckabfall bzw. dem geringen Druck ist es grundsätzlich möglich, dass sich eine Kavitation der Hydraulikflüssigkeit im Medienausgleichsraum 186 bildet. Um dies zu verhindern, ist der Medienausgleichsraum 186 mit dem ersten Speicherraum 182 des Kolbenspeichers 140 medienführend verbunden. Auf diese Weise kann trotz des geringen Vorspanndrucks des Kolbenspeichers 140 von beispielsweise ca. 2 bar aus dem ersten Speicherraum 182 des Kolbenspeichers 140 weiteres Arbeitsfluid in den Medienausgleichsraum 186 in der Art eines Pendelvolumens nachgeführt werden. Somit wird der Speicherkolben 172 auf dem letzten Wegstück der Kolbenstange 104 bis zur Anschlagposition 138 vom Anschlag 188 weg in Richtung der Kolbenanordnung 144 so lange bewegt, bis der benötigte Volumenausgleich erfolgt ist.

Beim Ausfedervorgang aus dieser Endlage (Fig. 4) heraus werden die beschriebenen Vorgänge dann in umgekehrter Richtung durchlaufen. Wenn sich die Kolbenanordnung 144 von der Anschlagposition 138 in Ausfederrichtung AR weg bewegt, wird zuerst aufgrund des geringeren hydraulischen Widerstandes Arbeitsfluid aus dem sich im Volumen verringernden Ausgleichsraum 186 in den ersten Speicherraum 182 des Kolbenspeichers 140 eingebracht. Dies führt dazu, dass der Speicherkolben 172 aufgrund des steigenden Drucks im ersten Speicherraum 182 zurück in Richtung des Anschlags 188 verfahren wird, bis er maximal in Anlage an den Anschlag 188 gerät. Danach kann das Arbeitsfluid nur noch über die Drosselstelle 212 vom Ausgleichsraum 186 in den ersten Medienraum 120 nachgeführt werden. Durch die Ausfederbewegung entfernt sich die Kolbenanordnung 144 vom Trennelement 118, bis die in der Fig. 2 beispielhaft gezeigte mittlere Position der Kolbenstange 104 erneut erreicht ist, wobei zeitgleich in der Art eines Pendelvolumenausgleichs die Fluidmenge im Medienraum 120 durch den Ausgleichsraum 186 ausgeglichen wird.

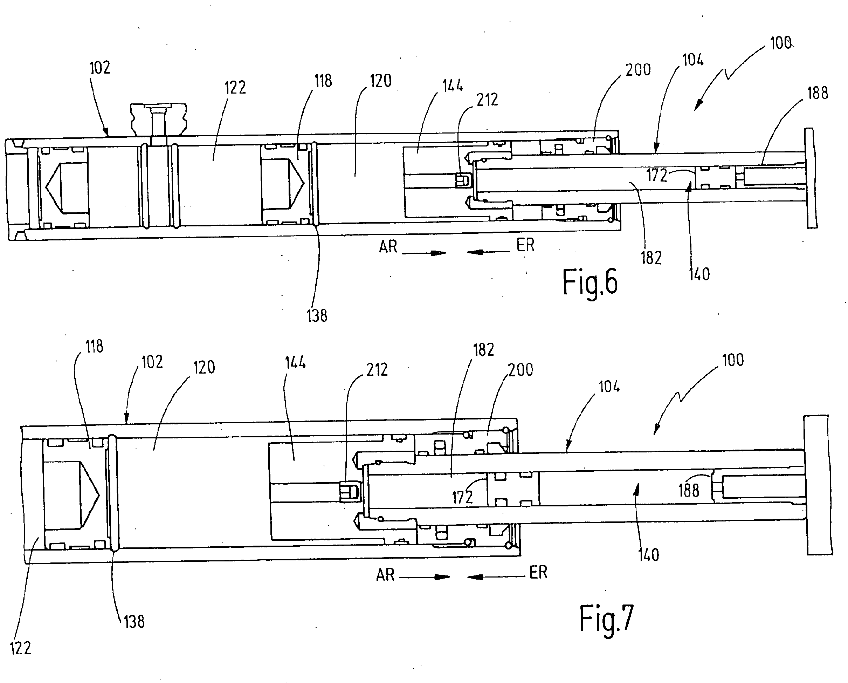

Der weitere Ausfedervorgang für die erfindungsgemäße Kolben-Zylinder-Anordnung 100, ausgehend von der mittleren Position der Kolbenstange 104 nach der Fig. 5, ist in den Fig. 6 und 7 gezeigt. Die Fig. 5 ist insoweit identisch zu Fig. 2. Wird die Kolbenstange 104 ausgehend von dieser mittleren Position aus dem Zylindergehäuse 102 herausbewegt, so wird zunächst weiteres Arbeitsfluid aus dem Medienausgleichsraum 186 über die Drosselstelle 212 in den ersten Medienraum 120 wiederum in der Art eines Pendelvolumens verdrängt. Aufgrund der größeren kreisförmigen Querschnittsfläche des ersten Medienraums 120 im Vergleich zur ringförmigen Querschnittsfläche des Medienausgleichsraums 186 kann aber pro zurückgelegter Wegstrecke nicht genügend Arbeitsfluid nachgeführt werden, um das Volumen im ersten Medienraum 120 aufrecht zu erhalten.

In dem Zustand der Fig. 6 ist das erste Trennelement 118 an die Anschlagposition 138 angelaufen. Wird die Kolbenstange 104 nun weiter aus dem Zylindergehäuse 102 herausbewegt, sinkt der Druck im ersten Medienraum 120 und im Medienausgleichsraum 186 weitgehend ab, bis Werte von ca. 1,5 bar bis maximal 2 bar erreicht werden, so dass aufgrund des höheren Druckes des Speichergases im Kolbenspeicher 140 von ca. 2 bar und mehr weiteres Arbeitsfluid aus dem ersten Speicherraum 182 über die Drosselstelle 212 in den ersten Medienraum 120 eingebracht wird. Hierbei bewegt sich dann der Speicherkolben 172 wiederum vom Anschlag 188 weg in Richtung der Kolbenanordnung 144. Dieser Zustand ist in Fig. 7 gezeigt. Durch den Einsatz des Kolbenspeichers 140 als Nachführeinrichtung an fehlendem Fluidvolumen wird somit Kavitation sowohl im ersten Medienraum 120 als auch im Medienausgleichsraum 186 vermieden. Durch die Androsselung des jeweils nachzuführenden Fluids über die Blende oder Drosselstelle 212 ist auch eine wirksame Endlagendämpfung für die Kolbenstange 104 bei deren Ausfedervorgang bis zur Endlagenstellung nach der Fig. 7 erreicht.

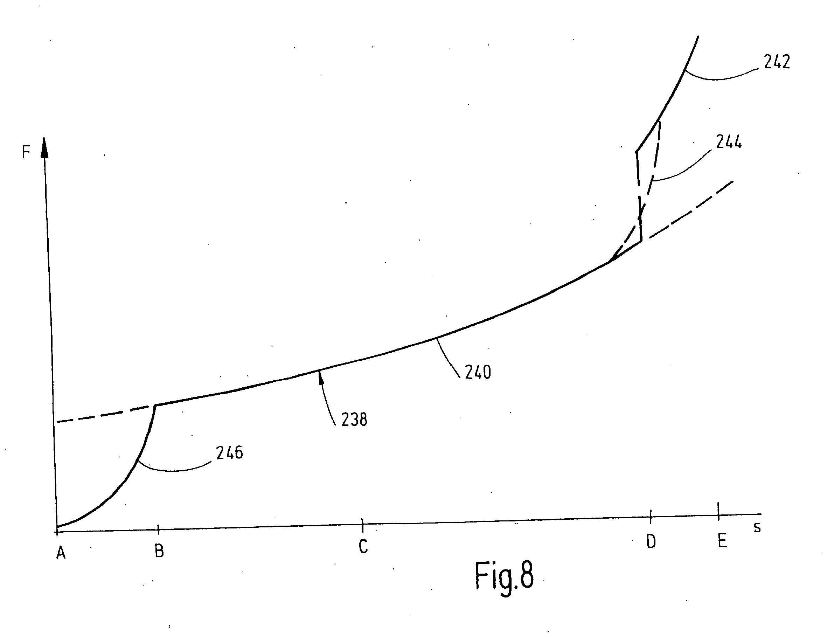

Die Kraft-Weg-Kennlinie 238 der erfindungsgemäßen Kolben-Zylinder-Anordnung 100 ist in der Fig. 8 gezeigt. Ausgehend von einer mittleren Position C (vergleichbar dem Einstellzustand der Gesamtvorrichtung nach der Fig. 2 oder 5) kann die Kolbenstange 104 in Einfederrichtung ER entlang einer exponentiell verlaufenden Kennlinie 240, die im Wesentlichen durch die Verdrängung von Arbeitsfluid vom ersten Medienraum 120 in den Medienausgleichsraum 186 bestimmt wird, bis zur Position D (vergleichbar dem Zustand der Fig. 3) geschoben werden. Wenn die Kolbenanordnung 144 an den Trennkolben 118 in Anlage kommt, springt die Kennlinie 242 auf ein höheres Niveau. Von dort aus verläuft die Kennlinie 242 wiederum exponentiell bis zur Position E (vergleichbar dem Zustand der Fig. 4), aber erheblich steiler als zwischen den Positionen C und D. Dieser steilere Anstieg wird durch das Arbeitsvermögen des Kolbenspeichers 140 bestimmt. Um den im Wesentlichen vertikal verlaufenden Kennliniensprung abzumildern, ist die Puffereinrichtung 146 in Form des Elastomerpuffers am Trennkolben 118 vorgesehen. Diese hat den Effekt, dass der Kennliniensprung einen weicheren Verlauf einnimmt, der durch die exponentiell verlaufende gestrichelte Übergangskennlinie 244 verdeutlicht wird. Entsprechend kann die Kolbenstange 104 von der Position E zurück zur Position C bewegt werden, wobei die Kraft wiederum dem gezeigten Verlauf der Kennlinie 242, 244, 240 entspricht. Aufgrund der "harmonisch" verlaufenden Kennlinie ist über den gesamten Arbeitsbereich der erfindungsgemäßen Anordnung ein gleichmäßiges Dämpfungsverhalten in beiden Arbeitsrichtungen (Ein- und Ausfedern) erreicht mit einer verbesserten Endlagendämpfung.

Wird die Kolbenstange 104 ausgehend von der Position C in Richtung der Position B (vergleichbar dem Zustand der Fig. 6) aus dem Zylindergehäuse 102 herausgezogen, so entspricht der Verlauf der erforderlichen Kraft wiederum dem relativ flachen exponentiellen Verlauf der Kennlinie 240 im mittleren Bereich. An der Position B ist die Kolbenstange so weit aus dem Zylindergehäuse herausgezogen, dass das Trennelement 118 an die Anschlagposition 138 (vgl. Fig. 1) angelaufen ist. Wird die Kolbenstange 102 weiter in der Ausfederrichtung AR bewegt, so wird wiederum Arbeitsfluid aus dem Kolbenspeicher 140 in der Kolbenstange 104 abgerufen. Der Verlauf der Kennlinie 246 bis zur Position A (vergleichbar dem eingenommenen Zustand der Vorrichtung nach der Fig. 7) ist deshalb wiederum erheblich steiler verlaufend als im Bereich zwischen den Positionen B und C. In der vollständig ausgezogenen Position A ist die Kraft beinahe auf den Wert Null abgesunken. Die Kolbenstange 104 kann aus dieser Endlage wieder in Richtung der mittleren Position C bewegt werden, wobei der Kraftaufwand dem Verlauf der Kennlinie 246, 240 folgt. Insbesondere setzt die eine sprunghafte Endlagendämpfung ein, wenn die Kolbenanordnung 144 an den Trennkolben 118 anschlägt.

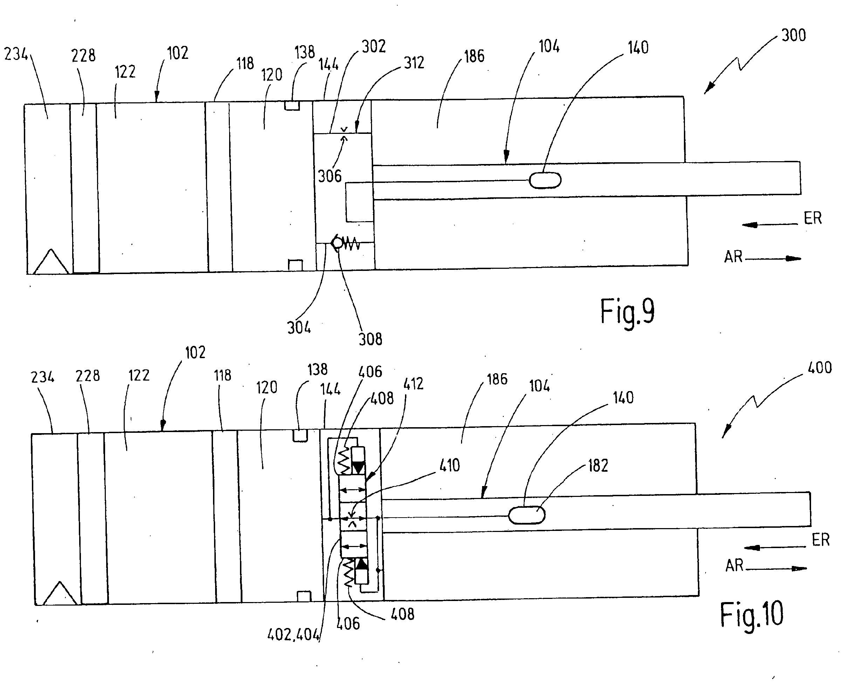

In den Fig. 9 bis 12 sind verschiedene Ausführungsformen von erfindungsgemäßen Kolben-Zylinder-Anordnungen 300, 400, 500, 600 gezeigt, bei denen die Dämpfungseinrichtung 312, 412, 512, 612 in der Kolbenanordnung 144 unterschiedlich realisiert ist. In den Fig. 1 bis 7 war die Dämpfungseinrichtung 212 jeweils durch einen Fluidkanal 216-220 mit einer darin angeordneten Blende oder Drosselstelle 212 verwirklicht.

In Fig. 9 sind nun zwei Fluidkanäle 302, 304 vorgesehen, wobei der in der Bildebene obere eine Drosselstelle 306 aufweist und der in der Bildebene untere ein Rückschlagventil 308, das in Richtung des Medienausgleichsraums 186 öffnet. Bei dieser Ausführungsform ist die Dämpfungswirkung in Einfederrichtung ER geringer als in der Ausfederrichtung AR. Hierbei ist der Kolbenspeicher 140 mit dem Medienausgleichsraum 186 unmittelbar ohne weiteres Hemmnis medienführend verbunden.

In Fig. 10 ist die Dämpfungseinrichtung 412 durch ein Schaltventil 402 mit drei Schaltstellungen gebildet. Der Ventilkolben 404 des Schaltventils 402 ist auf seinen Steuerseiten 406 von Druckfedern 408 und dem Fluiddruck im Medienraum 120 und Medienausgleichsraum 186 sowie dem ersten Speicherraum 182 des Kolbenspeichers 140 beaufschlagt. In der mittleren Stellung des Ventilkolbens 404 wird der Fluss des Arbeitsfluids durch das Schaltventil 402 durch eine Drosselstelle 410 gedrosselt. Steigt der Druck im ersten Medienraum 120 oder im Medienausgleichsraum 186 sowie dem Kolbenspeicher 140 an, so wird der Ventilkolben 404 in eine seiner entgegengesetzt angeordneten Endlagen bewegt, in denen das Schaltventil 402 vom Arbeitsfluid ungehindert durchströmbar ist. Auf diese Weise wird die Dämpfungswirkung der Dämpfungseinrichtung 412 bei schnellen Bewegungen der Kolbenstange 104 reduziert, weil sich bei diesen Bewegungen besonders große Druckunterschiede zwischen dem ersten Medienraum 120 und dem zweiten Medienraum 186 einstellen, die in der Kürze der Zeit nicht über die Dämpfungseinrichtung 412 abgebaut werden können, die in der mittleren Position des Ventilkolbens 404 die Androsselung des Fluidstroms für einen Dämpfungsvorgang veranlasst.

In der Ausführungsform nach der Fig. 11 weist die Dämpfungseinrichtung 512 zwei Fluidkanäle 502, 504 zwischen dem ersten Medienraum 120 und dem Medienausgleichsraum 186 auf, an den der Kolbenspeicher 140 fluidführend und widerstandsfrei angeschlossen ist. Die Fluidkanäle 102, 104 weisen jeweils ein Rückschlagventil 506, 508 auf, wobei das eine in Richtung des Medienausgleichsraums 186 und das andere in Richtung des ersten Medienraums 120 öffnet. Stromauf des jeweiligen Rückschlagventils 506, 508 gesehen ist jeweils eine Drosselstelle 510 vorhanden. Mit dieser Ausführungsform kann das Dämpfungsverhalten der Dämpfungseinrichtung 512 in der Einfederrichtung ER abweichend von dem Dämpfungsverhalten in der Ausfederrichtung AR gestaltet werden.

Die Ausführungsform der Fig. 12 unterscheidet sich hiervon lediglich dadurch, dass ein zusätzlicher mittlerer Fluidkanal 602 vorgesehen ist. Im mittleren Fluidkanal 602 ist eine Druckwaage 604 in der Art eines Druckbegrenzungsventils angeordnet, die auf ihren Steuerseiten einerseits vom Druck im ersten Medienraum 120 und andererseits vom Druck im Medienausgleichsraum 186 und einer Druckfeder 606 beaufschlagt ist. Durch einen höheren relativen Druck im ersten Medienraum 120 wird die Druckwaage 604 und damit der Fluidstrom vom ersten Medienraum 120 zum Medienausgleichsraum 186 sowie dem an diesen Raum 186 permanent angeschlossenen Kolbenspeicher 140 geöffnet.

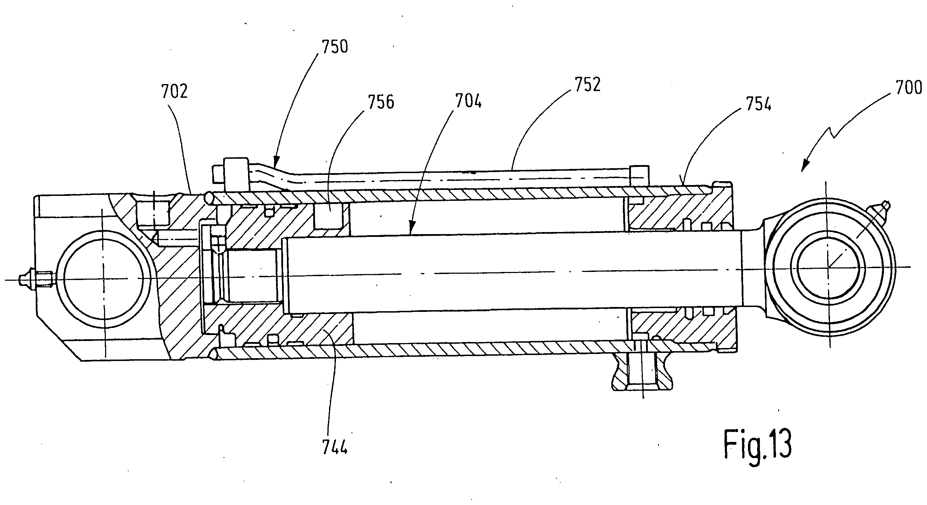

In Fig. 13 ist eine an sich bekannte Kolben-Zylinder-Anordnung 700 mit einem Weg-Messsystem 750 gezeigt. Eine Kolbenstange 704 ist in einem Zylindergehäuse 702 bewegbar angeordnet. Das Weg-Messsystem 750 ist zur Bestimmung der Position der Kolbenanordnung 744 vorgesehen. Es ist mit seiner streckenförmigen Positionsüberwachung 752 auf der Außenseite 754 des Zylindergehäuses 702 angeordnet. Der Positionsgeber 756 des Weg-Messsystems 750 ist in Form eines Magneten in die Kolbenanordnung 744 integriert. Mithin kann die Position der Kolbenstange 702 exakt bestimmt werden. Ein dahingehendes Positions-Wegmess-System lässt sich auch für die erfindungsgemäße Kolben-Zylinder-Anordnung einsetzen.

Durch die erfindungsgemäße Kolben-Zylinder-Anordnung 100, 300, 400, 500, 600 werden gleich mehrere Vorteile erreicht. Durch den hydropneumatischen Speicher 160 wird der erste Medienraum 120 unter einer Vorspannung gehalten, durch die eine Kavitation des Arbeitsfluides im ersten Medienraum 120 oder im Medienausgleichsraum 186 in jedem Betriebszustand der genannten Anordnung wirksam verhindert wird. Auf diese Weise kann es auch nicht zu einer damit einhergehenden, ungewollten Veränderung der Feder-Dämpfungs-Charakteristik der Kolben-Zylinder-Anordnung 100, 300, 400, 500, 600 kommen. Weiterhin werden Schäden verhindert, die dadurch entstehen können, dass durch Kavitation aus dem Arbeitsfluid austretende Gasblasen die Feder-Dämpfungscharakteristik nachteilig bis zum Ausfall der Anordnung beeinträchtigen.

## Patentansprüche

1. Hydropneumatische Kolben-Zylinder-Anordnung, insbesondere zur Verwendung in Fahrzeug-Federungssystemen und zur Dämpfung von Bewegungen einer Fahrerkabine eines dahingehenden Fahrzeuges, mit einem Zylindergehäuse (102) mit mindestens einem darin längsverfahrbar angeordneten Trennkolben (118), der einen ersten Medienraum (120), insbesondere zur Aufnahme eines Arbeitsfluides, wie einem Hydrauliköl, von einem zweiten Medienraum (122), insbesondere zur Aufnahme eines Arbeitsgases, wie Stickstoff (N₂), bevorzugt mediendicht, trennt, und mit einem hydropneumatischen Speicher (160), der auf den ersten Medienraum (120) im Zylindergehäuse (102) einwirkt, wobei als hydropneumatischer Speicher (160) ein Kolbenspeicher (140) mit einem Speichergehäuse (156) und mit mindestens einem darin längsverfahrbar angeordneten Speicherkolben (172) vorgesehen ist, wobei dieser Speicherkolben (172) einen ersten Speicherraum (182), insbesondere zur Aufnahme des Arbeitsfluides, von einem zweiten Speicherraum (184), insbesondere zur Aufnahme eines Speichergases, wie Stickstoff (N₂), bevorzugt mediendicht, trennt, wobei der erste Speicherraum (182) mit dem ersten Medienraum (120) medienführend verbunden ist, und wobei ein Medienausgleichsraum (186), insbesondere zur Aufnahme des Arbeitsfluides, zwischen der Außenseite (196) der Stange (156) und der Innenseite (198) des Zylindergehäuses (102) angeordnet ist, **dadurch gekennzeichnet, dass** dieser Medienausgleichsraum (186) permanent über eine Dämpfungseinrichtung (212, 312, 412, 512, 612) in einer Kolbenanordnung (144) an einer freien Stirnseite (214) einer Kolbenstange (104) mit dem ersten Medienraum (120) medienführend verbunden ist und dass dieser Medienausgleichsraum (186) zur Verhinderung von Kavitation zusätzlich permanent mit dem ersten Speicherraum (182) direkt medienführend verbunden ist.

2. Kolben-Zylinder-Anordnung nach Anspruch 1, **dadurch gekennzeichnet, dass** das Speichergehäuse (156) als hohle Stange ausgebildet ist, die in dem Zylindergehäuse (102) längsverfahrbar geführt ist und die zumindest teilweise eine Hohlkammer (158) umfasst, in welcher der Speicherkolben (172) längsverfahrbar geführt ist.

3. Kolben-Zylinder-Anordnung nach Anspruch 1 oder 2, **dadurch gekennzeichnet, dass** die Dämpfungseinrichtung (212, 312, 412, 512, 612) eine Drosselstelle (212, 306, 410, 510) ist.

4. Kolben-Zylinder-Anordnung nach einem der Ansprüche 1 bis 3, **dadurch gekennzeichnet, dass** sich das Volumen des Medienausgleichsraums (186) bei einem Einfedervorgang vergrößert und bei einem Ausfedervorgang verkleinert und dass sich das Volumen des ersten Medienraumes (120) dabei entsprechend umgekehrt verändert.

5. Kolben-Zylinder-Anordnung nach Anspruch 3 oder 4, **dadurch gekennzeichnet, dass** ein Weg-Messsystem (750) zur Bestimmung der Position der Kolbenanordnung (744) vorgesehen ist, das mit seiner streckenförmigen Positionsüberwachung (752) auf der Außenseite (754) des Zylindergehäuses (702) angeordnet ist und dessen Positionsgeber (756), insbesondere in Form eines Magneten, in die Kolbenanordnung (744) integriert ist.

6. Kolben-Zylinder-Anordnung nach einem der vorstehenden Ansprüche, **dadurch gekennzeichnet, dass** ein Anschlag (188) für den Speicherkolben (172) an der anderen freien Stirnseite (190) der Kolbenstange (104), respektive in deren freiem Endbereich, vorgesehen ist, wobei dieser Anschlag (188) eine Aufnahmemöglichkeit (182) zur zumindest teilweisen Bevorratung eines Speichergases aufweist.

7. Kolben-Zylinder-Anordnung Anspruch 6, **dadurch gekennzeichnet, dass** sich der Speicherkolben (172) vom Anschlag (188) weg bewegt, wenn das Arbeitsfluid im ersten Medienraum (120) oder im Medienausgleichsraum (186) unter einem Druck steht, der niedriger als der aktuelle Druck des Speichergases ist.

8. Kolben-Zylinder-Anordnung nach einem der vorstehenden Ansprüche, **dadurch gekennzeichnet, dass** der Trennkolben (118) zur Bildung einer Null-Lage oder einer Ausgangssituation für den Federungs- und Dämpfungsvorgang aus einer Anschlagposition (138) heraus entgegen dem den Kolbenspeicher (140) aufnehmenden Ende (142) des Zylindergehäuses (102) bewegbar ist.

9. Kolben-Zylinder-Anordnung nach einem der vorstehenden Ansprüche, **dadurch gekennzeichnet, dass** der Trennkolben (118) mit einer Puffereinrichtung (146), insbesondere in Form eines Elastomerpuffers, auf seiner dem Kolbenspeicher (140) zugewandten Seite (148) versehen ist.

10. Kolben-Zylinder-Anordnung nach einem der vorstehenden Ansprüche, **dadurch gekennzeichnet, dass** ein weiterer Trennkolben (228) im Zylindergehäuse (102) zur Bildung einer Niveaueinstellung (230) angeordnet ist, der zusammen mit dem einen Trennkolben (118) den zweiten Medienraum (122) mit dem Arbeitsgas begrenzt und der auf seiner dem zweiten Medienraum (122) abgewandten Seite (232) an einen dritten Medienraum (234) im Zylindergehäuse (102) angrenzt, der bevorzugt mit einem Niveaueinstellungsfluid versorgbar ist.

## Claims

1. Hydropneumatic piston-cylinder arrangement, particularly for use in vehicle suspension systems and for damping movements of a driver's cab in a corresponding vehicle, comprising a cylinder housing (102) with at least one separator piston (118) arranged therein such that it can be displaced longitudinally, said separator piston separating a first media chamber (120), particularly for holding a working fluid, such as a hydraulic oil, from a second media chamber (122), particularly for holding a working gas, such as nitrogen (N₂), preferably in a media-tight manner, and comprising a hydropneumatic accumulator (160), which acts on the first media chamber (120) in the cylinder housing (102), wherein a piston accumulator (140) with an accumulator housing (156) and with at least one accumulator piston (172) arranged therein such that it can be displaced longitudinally is provided as a hydropneumatic accumulator (160), said accumulator piston (172) separating a first accumulator chamber (182), particularly for holding the working fluid, from a second accumulator chamber (184), particularly for holding an accumulator gas, such as nitrogen (N₂), preferably in a media-tight manner, wherein the first accumulator chamber (182) is connected to the first media chamber (120) such as to convey media, and wherein a media compensation chamber (186), particularly for holding the working fluid, is arranged between the outside (196) of the rod (156) and the inside (198) of the cylinder housing (102), **characterised in that** this media compensation chamber (186) is permanently connected to the first media chamber (120) such as to convey media via a damping device (212, 312, 412, 512, 612) in a piston arrangement (144) on a free end face (214) of a piston rod (104) and **in that** this media compensation chamber (186) is also permanently connected to the first accumulator chamber (182) so as to convey media directly in order to prevent cavitation.

2. Piston-cylinder arrangement according to claim 1, **characterised in that** the accumulator housing (156) is designed as a hollow rod, which is guided in the cylinder housing (102) such that it can be displaced longitudinally and which at least partially surrounds a hollow chamber (158) in which the accumulator piston (172) is guided such that it can be displaced longitudinally.

3. Piston-cylinder arrangement according to either claim 1 or 2, **characterised in that** the damping device (212, 312, 412, 512, 612) is a throttle point (212, 306, 410, 510).

4. Piston-cylinder arrangement according to any one of claims 1 to 3, **characterised in that** the volume of the media compensation chamber (186) expands during a spring compression process and shrinks during a spring rebound process, and **in that** the volume of the first media chamber (120) changes correspondingly in the opposite direction in this process.

5. Piston-cylinder arrangement according to either claim 3 or claim 4, **characterised in that** a displacement measuring system (750) is provided to determine the position of the piston arrangement (744), said displacement measuring system being arranged with its elongated position monitoring system (752) on the outside (754) of the cylinder housing (702) and its position sensor (756), especially in the form of a magnet, being an integral part of the piston arrangement (744).

6. Piston-cylinder arrangement according to any one of the preceding claims, **characterised in that** a stop (188) is provided for the accumulator piston (172) on the other free end face (190) of the piston rod (104), or in its free end region respectively, said stop (188) comprising a holding means (182) for at least partially storing an accumulator gas.

7. Piston-cylinder arrangement (*according to*) claim 6, **characterised in that** the accumulator piston (172) moves away from the stop (188) when the working fluid in the first media chamber (120) or in the media compensation chamber (186) is subjected to a pressure which is lower than the current pressure of the accumulator gas.

8. Piston-cylinder arrangement according to any one of the preceding claims, **characterised in that** the separator piston (118) can be moved out of a stop position (138) opposite the end (142) of the cylinder housing (102) holding the piston accumulator (140) to form a zero position or a starting position for the suspension and damping process.

9. Piston-cylinder arrangement according to any one of the preceding claims, **characterised in that** the separator piston (118) is furnished with a buffer device (146), particularly in the form of an elastomer buffer, on its side facing the piston accumulator (140).

10. Piston-cylinder arrangement according to any one of the preceding claims, **characterised in that** an additional separator piston (228) is arranged in the cylinder housing (102) to form a level adjustment (230), said separator piston, together with the one separator piston (118), delimiting the second media chamber (122) with the working gas and said piston being adjacent, on its side (232) facing away from the second media chamber (122), to a third media chamber (234) in the cylinder housing (102), said third media chamber preferably being able to be supplied with a level adjustment fluid.

## Revendications

1. Système hydropneumatique de piston-cylindre, à utiliser notamment dans des systèmes de suspension de véhicule et pour amortir des déplacements d'une cabine de conducteur d'un véhicule en marche, comprenant une enveloppe (102) formant cylindre, ayant au moins un piston (118) de séparation, qui y est disposé avec possibilité de se déplacer longitudinalement et qui sépare, de préférence d'une manière étanche aux milieux, un premier espace (120) pour des milieux, notamment de réception d'un fluide de travail, comme de l'huile hydraulique, d'un deuxième espace (122) pour des milieux, notamment de réception d'un gaz de travail, comme de l'azote (N₂), et comprenant un accumulateur (160) hydropneumatique, qui agit sur le premier espace (120) pour des milieux dans l'enveloppe (102) formant cylindre, dans lequel il est prévu, comme accumulateur (160) hydropneumatique, un accumulateur (140) à piston, ayant une enveloppe (156) d'accumulateur et ayant au moins un piston (172) d'accumulateur, qui y est disposé avec possibilité de se déplacer longitudinalement, ce piston (172) d'accumulateur séparant, de préférence d'une manière étanche aux milieux, un premier espace (182) d'accumulation, notamment de réception du fluide de travail, d'un deuxième espace (184) d'accumulation, notamment de réception d'un gaz d'accumulation, comme de l'azote (N₂), le premier espace (182) d'accumulation communiquant de manière à conduire des milieux avec le premier espace (120) pour des milieux et un espace (186) de compensation de milieux, notamment de réception du fluide de travail, étant disposé entre la face (196) extérieure de la tige (156) et la face (198) intérieure de l'enveloppe (102) formant cylindre, **caractérisé en ce que** cet espace (186) de compensation de milieux communique, de manière à conduire des milieux, en permanence, par l'intermédiaire d'un dispositif (212, 312, 412, 512, 612) d'amortissement, dans un agencement (144) de piston à un côté (214) frontal libre d'une tige (104) de piston, avec le premier espace (120) pour des milieux, et **en ce que** cet espace (186) de compensation de milieux communique directement, de manière à conduire des milieux, pour empêcher la cavitation, supplémentairement en permanence avec le premier espace (182) d'accumulation.

2. Système de piston-cylindre suivant la revendication 1, **caractérisé en ce que** l'enveloppe (156) d'accumulateur est constituée sous la forme d'une tige creuse, qui est guidée, avec possibilité de se déplacer longitudinalement, dans l'enveloppe (102) formant cylindre, et qui comprend, au moins en partie, une chambre (158) creuse, dans laquelle le piston (172) de l'accumulateur est guidé avec possibilité de se déplacer longitudinalement.

3. Système de piston-cylindre suivant la revendication 1 ou 2, **caractérisé en ce que** le dispositif (212, 312, 412, 512, 612) d'amortissement est un point (212, 306, 410, 510) d'étranglement.

4. Système de piston-cylindre suivant l'une des revendications 1 à 3, **caractérisé en ce que** le volume de l'espace (186) de compensation de milieux s'agrandit lors d'une opération de compression et diminue lors d'une opération de décompression et **en ce que** le volume du premier espace (120) pour des milieux se modifie en sens inverse de manière correspondante.

5. Système de piston-cylindre suivant la revendication 3 ou 4, **caractérisé en ce qu'**il est prévu, pour déterminer la position de l'agencement (744) de piston, un système (750) de mesure de trajet, qui est disposé par son contrôle (752) de position en forme de segment sur la face (754) extérieure de l'enveloppe (702) formant cylindre et dont l'indicateur (756) de position, notamment sous la forme d'un aimant, est intégré à l'agencement (744) de piston.

6. Système de piston-cylindre suivant l'une des revendications précédentes, **caractérisé en ce qu'**il est prévu une butée (188) pour le piston (172) d'accumulation à l'autre côté (190) frontal libre de la tige (104) du piston, respectivement dans sa partie d'extrémité libre, cette butée (188) ayant une possibilité (182) de réception de mise en réserve, au moins en partie, d'un gaz d'accumulation.

7. Système de piston-cylindre suivant la revendication 6, **caractérisé en ce que** le piston (172) d'accumulation est éloigné de la butée (188) si le fluide de travail, dans le premier espace (120) pour des milieux, ou dans l'espace (186) de compensation de milieux est sous une pression, qui est plus basse que la pression en cours du gaz d'accumulation.

8. Système de piston-cylindre suivant l'une des revendications précédentes, **caractérisé en ce que** le piston (118) de séparation peut, pour former une position de zéro ou une situation initiale pour l'opération de suspension et d'amortissement, être déplacé d'une position (138) de butée vers l'extrémité (142), recevant l'accumulateur (140) à piston, de l'enveloppe (102) formant cylindre.

9. Système de piston-cylindre suivant l'une des revendications précédentes, **caractérisé en ce que** le piston (118) de séparation est pourvu, sur son côté (148) tourné vers l'accumulateur (140) à piston, d'un dispositif (146) tampon, notamment sous la forme d'un tampon en élastomère.

10. Système de piston-cylindre suivant l'une des revendications précédentes, **caractérisé en ce que** pour former un réglage (230) de niveau, il est monté, dans l'enveloppe (102) formant cylindre, un autre piston (228) de séparation, qui, ensemble avec le un piston (118) de séparation, délimite le deuxième espace (122) pour des milieux ayant le gaz de travail et qui est voisin, sur son côté 232, loin du deuxième espace (122) pour des milieux, d'un troisième espace (234) pour des milieux dans l'enveloppe (102) formant cylindre, lequel peut être alimenté en un fluide de réglage de niveau.
